# EUROPÄISCHE PATENTANMELDUNG

(11) **EP 1 407 659 A1**
(43) Veröffentlichungstag der Anmeldung: **14.04.2004**
(21) Anmeldenummer: 03013908.3
(22) Anmeldetag: 20.06.2003
(51) Int. Cl.: A01G 1/12, E01H 1/08

(54) **Radialgebläse für Laub- und Abfallsauger, Laubbläser oder Laubladegeräte**

(30) Priorität: 11.10.2002 DE 10247550
(71) Anmelder: Werner, Jürgen, 72636 Frickenhausen (DE); Beck, Thomas, 72581 Dettingen (DE)
(72) Erfinder: Werner, Jürgen, 72636 Frickenhausen (DE); Beck, Thomas, 72581 Dettingen (DE)
(74) Vertreter: Möbus, Daniela, Dr.-Ing.

(57) **Zusammenfassung**

Ein Radialgebläse für Laub- und Abfallsauger, Laub- und Abfallbläser oder Laub- und Abfallladegeräte mit einer Schalldämpfungseinrichtung in Form eines Helmholtz-Resonators (14), der an einem schallführenden Strömungskanal (12) des Gebläses (10) angeordnet ist.

## Beschreibung

Die Erfindung betrifft ein Radialgebläse für Laub- und Abfallsauger, Laub- und Abfallbläser oder Laub- und Abfallladegeräte mit einer Schalldämpfungseinrichtung.

Geräte zur Abfall- und Laubbearbeitung sind als Sauger, Bläser und auch als Lader im Handel erhältlich. Alle diese Geräte weisen ein Radialgebläse auf, das im Betrieb relativ laut ist.

Bisher wurden nur geringfügige Schalldämmmaßnahmen an diesen Geräten vorgesehen, da davon ausgegangen wurde, dass diese nur zur Tageszeit eingesetzt werden und die Bevölkerung in dieser Zeit die entstehende Lärmbelästigung ertragen muss. In zunehmendem Maße gehen jedoch Stadtreinigungsbetriebe dazu über, bereits sehr früh am Morgen Straßen und Gehwege von Laub zu befreien, da in den frühen Morgenstunden noch wenig Verkehr herrscht. In diesen Zeiten ist jedoch die durch die Laubsaugearbeiten entstehende Lärmbelästigung für die Bevölkerung nicht tolerierbar. Ferner begrenzen neue Gesetze zur Geräuschemission die Anwendung solcher Geräte in geschlossenen Wohngebieten.

Der Erfindung liegt daher die Aufgabe zugrunde, ein Radialgebläse für Laub- und Abfallsauger vorzuschlagen, das einen Betrieb dieser Geräte ohne nennenswerte Lärmbelästigung erlaubt.

Die Aufgabe wird mit einem Radialgebläse für Laub- und Abfallsauger, Laub- und Abfallbläser oder Laub- und Abfallladegeräte mit einer Schalldämpfungseinrichtung gelöst, das dadurch gekennzeichnet ist, dass die Schalldämpfungseinrichtung einen Helmholtz-Resonator aufweist, der an einem schallführenden Strömungskanal des Gebläses angeordnet ist. Helmholtz-Resonatoren sind insbesondere hervorragend dafür geeignet, tiefe Frequenzen des Gebläses auszufiltern. Hohe Frequenzen können durch Absorptionsschalldämpfeinrichtungen beseitigt werden, die an dem erfindungsgemäßen Gebläse zusätzlich vorgesehen sein können.

Der Helmholtz-Resonator kann über mindestens eine Rohrverbindung mit dem schallführenden Strömungskanal verbunden sein. Dabei ist es vorteilhaft, wenn die Eigenresonanzfrequenz des Helmholtz-Resonators einstellbar ist, da er im Bereich seiner Eigenresonanzfrequenz die höchste Wirksamkeit entfaltet. Die Einstellbarkeit der Eigenfrequenz kann dabei auf verschiedene Weise erfolgen. So kann die mindestens eine Rohrverbindung auswechselbar angeordnet sein. Es ist damit möglich, Rohre unterschiedlicher Länge oder unterschiedlichen Durchmessers zwischen dem Resonator und dem schallführenden Kanal vorzusehen und dadurch die Eigenresonanzfrequenz des Resonators zu beeinflussen.

Es ist aber auch möglich, die Eigenresonanzfrequenz dadurch einzustellen, dass der Querschnitt und/oder die Länge der mindestens einen Rohrverbindung einstellbar sind. So kann die Rohrverbindung beispielsweise als Teleskoprohr ausgebildet sein. In ihrem Inneren können querschnittsverändernde Einsätze eingebracht werden.

Darüber hinaus besteht natürlich auch die Möglichkeit, die Eigenresonanzfrequenz des Helmholtz-Resonators dadurch zu verändern, dass dessen Volumen variiert wird. Dies kann beispielsweise über eine verstellbare Wand des Resonators erfolgen.

Helmholtz-Resonatoren sind in aller Regel zylindrische Körper. Die Rohrverbindung kann dabei in die Zylinderwand des Helmholtz-Resonators münden. Es ist jedoch auch möglich, einen Helmholtz-Resonator in Reihe zum Stromführungskanal anzuordnen. Bei einer Reihenanordnung ist allerdings eher eine Beeinträchtigung der strömungstechnischen Eigenschaften des Gebläsesystems zu erwarten, die bei einem Abzweig-Resonator vermieden werden kann.

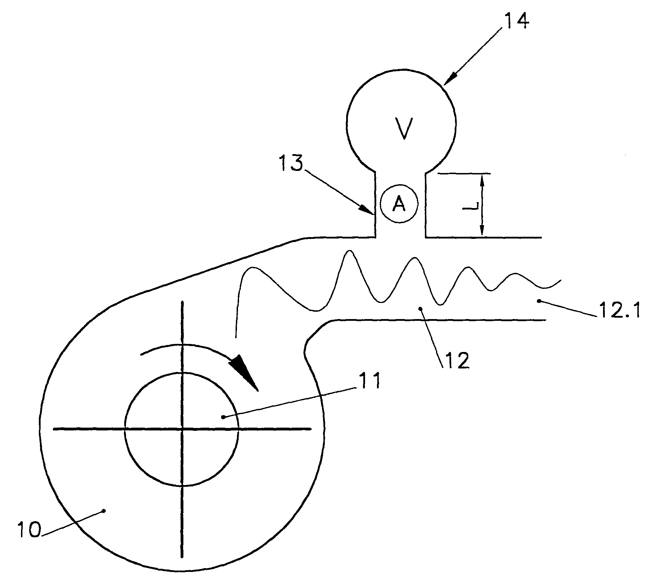

Nachfolgend wird ein bevorzugtes Ausführungsbeispiel eines erfindungsgemäßen Gebläses anhand der Zeichnung näher erläutert.

Die einzige Figur zeigt eine schematische Darstellung eines Radialgebläses 10 eines ansonsten nicht weiter dargestellten Laub- und Abfallsauggerätes, eines Bläsers oder eines Ladegerätes. Das Gebläse 10 weist eine zentrale Luftansaugung 11 und einen Strömungskanal 12 auf, der schallführend ist. Zwischen dem Gebläse 10 und der Mündung 12.1 des Strömungskanals 12 ist eine Rohrverbindung 13 zu einem Helmholtz-Resonator 14 angeordnet. Der Helmholtz-Resonator 14 ist ein zylindrischer Körper mit dem Volumen V. Die Rohrverbindung 13 weist einen Querschnitt A und eine Länge 1 auf. Die Eigenresonanzfrequenz des Resonators 14 und damit sein Dämpfungsverhalten ist durch Variation seines Volumens, der Veränderung des Querschnitts A der Rohrverbindung 13 und/oder durch Veränderung der Länge 1 der Rohrverbindung 13 beeinflussbar. Durch ein entsprechendes Abstimmen dieser drei Parameter V, A und 1 lässt sich der Resonator 14 also exakt auf das Schwingungsverhalten des Gebläses 10 einstellen. Die Nebenschlussanordnung des Resonators beeinflusst dabei die strömungstechnischen Eigenschaften des Gebläses nicht. Zwischen dem Resonator 14 können auch mehr als eine Rohrverbindung 13 angeordnet sein, die sich jeweils im Querschnitt und in der Länge unterscheiden können. Die Rohrverbindungen können alle gleichzeitig geöffnet sein oder im Wechsel geöffnet und geschlossen werden. Auch dadurch ist eine optimale Anpassung des Dämpfungsverhaltens des Resonators 14 an das Schallverhalten des Gebläses 10 möglich.

## Patentansprüche

1. Radialgebläse für Laub- und Abfallsauger, Laub- und Abfallbläser oder Laub- und Abfallladegeräte mit einer Schalldämpfungseinrichtung, **dadurch gekennzeichnet, dass** die Schalldämpfungseinrichtung einen Helmholtz-Resonator (14) aufweist, der an einem schallführenden Strömungskanal (12) des Gebläses (10) angeordnet ist.

2. Radialgebläse nach Anspruch 1, **dadurch gekennzeichnet, dass** der Helmholtz-Resonator (14) über mindestens eine Rohrverbindung (13) mit dem schallführenden Strömungskanal (12) verbunden ist.

3. Radialgebläse nach Anspruch 1 oder 2, **dadurch gekennzeichnet, dass** die Eigenresonanzfrequenz des Helmholtz-Resonators (14) einstellbar ist.

4. Radialgebläse nach einem der Ansprüche 1 bis 3, **dadurch gekennzeichnet, dass** die mindestens eine Rohrverbindung (13) auswechselbar angeordnet ist.

5. Radialgebläse nach Anspruch 3 oder 4, **dadurch gekennzeichnet, dass** der Querschnitt (A) und/oder die Länge (1) der mindestens einen Rohrverbindung (13) einstellbar sind.

6. Radialgebläse nach Anspruch 5, **dadurch gekennzeichnet, dass** die Rohrverbindung (13) eine Teleskoprohrverbindung ist.

7. Radialgebläse nach Anspruch 5 oder 6, **dadurch gekennzeichnet, dass** der Querschnitt (A) der mindestens einen Rohrverbindung (13) durch Einsatzkörper regulierbar ist.

8. Radialgebläse nach einem der Ansprüche 1 bis 7, **dadurch gekennzeichnet, dass** das Volumen (V) des Helmholtz-Resonators (14) einstellbar ist.
